# EUROPEAN PATENT APPLICATION

(11) **EP 4 708 997 A1**
(43) Date of publication of application: **11.03.2026**
(21) Application number: 23935671.0
(22) Date of filing: 04.05.2023
(51) Int. Cl.: H04W 72/0446

(54) **UPLINK COMMUNICATION METHOD AND APPARATUS, AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Dehns Germany Partnerschaft mbB
(86) International application number: PCT/CN2023/092116
(87) International publication number: WO 2024/227298

(57) **Abstract**

The present invention relates to the technical field of communications, and relates to an uplink (UL) communication method and apparatus, and a storage medium, for use in ensuring that a terminal transmits an UL signal on a correct time slot. The method comprises: receiving first information, the first information indicating that the terminal sends an UL signal in M time slots, and M being a positive integer; receiving second information, the second information indicating that the terminal supports sending the UL signal on a first symbol, and the first symbol comprising a subband full-duplex (SBFD) symbol, or the first symbol comprising a non-SBFD symbol, or the first symbol comprising an SBFD symbol and a non-SBFD symbol; and determining a first time slot as an available time slot of the UL signal on the basis of the first information and the second information.

## Description

### TECHNICAL FIELD

The present disclosure relates to the field of communication technology, and in particular to an uplink communication method, apparatus and a storage medium.

### BACKGROUND

In order to improve uplink coverage and throughput, study of subband full duplex (SBFD) is proposed in some solutions. For example, a carrier component (CC) can be divided into multiple subbands (SBs) in a frequency domain on a downlink (DL) symbol or a flexible (F) symbol. The multiple SBs may include an uplink (UL) subband and at least one DL subband, for example, 1 or 2 DL subband(s). When a symbol includes a DL subband and a UL subband in the frequency domain, the symbol may be called an SBFD symbol.

### SUMMARY

In order to overcome the problems existing in the related art, the present disclosure provides an uplink communication method, apparatus and storage medium.

According to a first aspect of some embodiments of the present disclosure, an uplink communication method is provided, where the method is performed by a terminal and includes: receiving first information, the first information indicating that the terminal transmits an uplink UL signal in M time slots, where M is a positive integer; receiving second information, the second information indicating that the terminal can transmit the UL signal on a first symbol, where the first symbol includes a subband full duplex SBFD symbol, or the first symbol includes a non-SBFD symbol, or the first symbol includes the SBFD symbol and the non-SBFD symbol; and determining a first time slot as an available time slot for the UL signal based on the first information and the second information.

In one implementation, determining the first time slot as the available time slot for the UL signal includes:
determining the first time slot as the available time slot for the UL signal based on a first condition;
where the first condition is used for determining a second time slot, and the second time slot is an unavailable time slot for the UL signal.

In one implementation, the first condition is determined based on at least one of following:
a category of a second symbol, where the second symbol is a symbol of the UL signal in one time slot;
a position of a third symbol, where the third symbol is a symbol where a synchronization signal block SSB is located; and
a first frequency domain range, where the first frequency domain range is a frequency domain range available for UL signal transmission on one symbol.

In one implementation, the first symbol includes the SBFD symbol and the non-SBFD symbol, and the first condition includes at least one of following:
at least one symbol of the second symbol is a downlink symbol;
at least one symbol of the second symbol overlaps with the third symbol;
at least one symbol of the second symbol overlaps with the third symbol, and an overlapping symbol is the non-SBFD symbol;
at least one symbol of the second symbol overlaps with the third symbol, and the overlapping symbol is the SBFD symbol, and the terminal satisfies a second condition, where the second condition is that the terminal receives the SSB on the third symbol for measuring; and
on at least one symbol of the second symbol, a second frequency domain range without partially or fully overlapping with the first frequency domain range is a frequency domain range of the UL signal on the second symbol.

In one implementation, the first symbol includes the SBFD symbol, and the first condition includes at least one of following:
at least one symbol of the second symbol is a downlink symbol;
at least one symbol of the second symbol is the non-SBFD symbol;
all the second symbol are the non-SBFD symbol;
at least one symbol of the second symbol overlaps with the third symbol;
at least one symbol of the second symbol overlaps with the third symbol, and an overlapping symbol is the non-SBFD symbol;
at least one symbol of the second symbol overlaps with the third symbol, and the overlapping symbol is the SBFD symbol, and the terminal satisfies a second condition, where the second condition is that the terminal receives the SSB on the third symbol for measuring; and
on at least one symbol of the second symbol, a second frequency domain range without partially or fully overlapping with the first frequency domain range is a frequency domain range of the UL signal on the second symbol.

In one implementation, the first symbol includes the non-SBFD symbol, and the first condition includes at least one of following:
at least one symbol of the second symbol is a downlink symbol;
at least one symbol of the second symbol is the downlink symbol or the SBFD symbol; and
at least one symbol of the second symbol overlaps with the third symbol.

According to a second aspect of some embodiments of the present disclosure, an uplink communication method is provided, where the method is performed by a network device and includes: sending first information, the first information indicating that a terminal transmits an uplink UL signal in M time slots, where M is a positive integer; sending second information, the second information indicating that the terminal can transmit the UL signal on the first symbol, where the first symbol includes a subband full duplex SBFD symbol, or the first symbol includes a non-SBFD symbol, or the first symbol includes the SBFD symbol and the non-SBFD symbol; and receiving the UL signal in the first time slot, where the first time slot is an available time slot for the UL signal.

In one implementation, the first time slot is determined based on a first condition;
where the first condition is used for determining a second time slot, and the second time slot is an unavailable time slot for the UL signal.

In one embodiment, the first condition is determined based on at least one of following:
a category of a second symbol, where the second symbol is a symbol of the UL signal in one time slot;
a position of a third symbol, where the third symbol is a symbol where a synchronization signal block SSB is located; and
a first frequency domain range, where the first frequency domain range is a frequency domain range available for UL signal transmission on one symbol.

In one implementation, the first symbol includes the SBFD symbol and the non-SBFD symbol, and the first condition includes at least one of following:
at least one symbol of the second symbol is a downlink symbol;
at least one symbol of the second symbol overlaps with the third symbol;
at least one symbol of the second symbol overlaps with the third symbol, and an overlapping symbol is the non-SBFD symbol;
at least one symbol of the second symbol overlaps with the third symbol, and the overlapping symbol is the SBFD symbol, and the terminal satisfies a second condition, where the second condition is that the terminal receives the SSB on the third symbol for measuring; and
on at least one symbol of the second symbol, a second frequency domain range without partially or fully overlapping with the first frequency domain range is a frequency domain range of the UL signal on the second symbol.

In one implementation, the first symbol includes the SBFD symbol, and the first condition includes at least one of following:
at least one symbol of the second symbol is a downlink symbol;
at least one symbol of the second symbol is the non-SBFD symbol;
all the second symbol are the non-SBFD symbol;
at least one symbol of the second symbol overlaps with the third symbol;
at least one symbol of the second symbol overlaps with the third symbol, and an overlapping symbol is the non-SBFD symbol;
at least one symbol of the second symbol overlaps with the third symbol, and the overlapping symbol is the SBFD symbol, and the terminal satisfies a second condition, where the second condition is that the terminal receives the SSB on the third symbol for measuring; and
on at least one symbol of the second symbol, a second frequency domain range without partially or fully overlapping with the first frequency domain range is a frequency domain range of the UL signal on the second symbol.

In one implementation, the first symbol includes the non-SBFD symbol, and the first condition includes at least one of following:
at least one symbol of the second symbol is a downlink symbol;
at least one symbol of the second symbol is the downlink symbol or the SBFD symbol; and
at least one symbol of the second symbol overlaps with the third symbol.

According to a third aspect of some embodiments of the present disclosure, an uplink communication apparatus is provided, where the apparatus includes: a receiving module, configured to receive first information, the first information indicating that the terminal transmits an uplink UL signal in M time slots, where M is a positive integer; the receiving module, further configured to receive second information, the second information indicating that the terminal can transmit the UL signal on a first symbol, where the first symbol includes a subband full duplex SBFD symbol, or the first symbol includes a non-SBFD symbol, or the first symbol includes the SBFD symbol and the non-SBFD symbol; and a processing module, configured to determine a first time slot as an available time slot for the UL signal based on the first information and the second information.

In one implementation, the processing module is configured to determine the first time slot as the available time slot for the UL signal in the following manner:
determining the first time slot as the available time slot for the UL signal based on a first condition;
where the first condition is used for determining a second time slot, and the second time slot is an unavailable time slot for the UL signal.

In one embodiment, the first condition is determined based on at least one of following:
a category of a second symbol, where the second symbol is a symbol of the UL signal in one time slot;
a position of a third symbol, where the third symbol is a symbol where a synchronization signal block SSB is located; and
a first frequency domain range, where the first frequency domain range is a frequency domain range available for UL signal transmission on one symbol.

In one implementation, the first symbol includes the SBFD symbol and the non-SBFD symbol, and the first condition includes at least one of following:
at least one symbol of the second symbol is a downlink symbol;
at least one symbol of the second symbol overlaps with the third symbol;
at least one symbol of the second symbol overlaps with the third symbol, and an overlapping symbol is the non-SBFD symbol;
at least one symbol of the second symbol overlaps with the third symbol, and the overlapping symbol is the SBFD symbol, and the terminal satisfies a second condition, where the second condition is that the terminal receives the SSB on the third symbol for measuring; and
on at least one symbol of the second symbol, a second frequency domain range without partially or fully overlapping with the first frequency domain range is a frequency domain range of the UL signal on the second symbol.

In one implementation, the first symbol includes the SBFD symbol, and the first condition includes at least one of following:
at least one symbol of the second symbol is a downlink symbol;
at least one symbol of the second symbol is the non-SBFD symbol;
all the second symbol are the non-SBFD symbol;
at least one symbol of the second symbol overlaps with the third symbol;
at least one symbol of the second symbol overlaps with the third symbol, and an overlapping symbol is the non-SBFD symbol;
at least one symbol of the second symbol overlaps with the third symbol, and the overlapping symbol is the SBFD symbol, and the terminal satisfies a second condition, where the second condition is that the terminal receives the SSB on the third symbol for measuring; and
on at least one symbol of the second symbol, a second frequency domain range without partially or fully overlapping with the first frequency domain range is a frequency domain range of the UL signal on the second symbol.

In one implementation, the first symbol includes the non-SBFD symbol, and the first condition includes at least one of the following:
at least one symbol of the second symbol is a downlink symbol;
at least one symbol of the second symbol is the downlink symbol or the SBFD symbol; and
at least one symbol of the second symbol overlaps with the third symbol.

According to a fourth aspect of some embodiments of the present disclosure, an uplink communication apparatus is provided, where the apparatus including: a sending module, configured to send first information, the first information indicating that a terminal transmits an uplink UL signal in M time slots, where M is a positive integer; the sending module, further configured to send second information, the second information indicating that the terminal can transmit the UL signal on the first symbol, where the first symbol including a subband full duplex SBFD symbol, or the first symbol includes a non-SBFD symbol, or the first symbol includes the SBFD symbol and the non-SBFD symbol; and a receiving module, configured to receive the UL signal in the first time slot, where the first time slot is an available time slot for the UL signal.

In one implementation, the first time slot is determined based on a first condition;
where the first condition is used for determining a second time slot, and the second time slot is an unavailable time slot for the UL signal.

In one embodiment, the first condition is determined based on at least one of the following:
a category of a second symbol, where the second symbol is a symbol of the UL signal in one time slot;
a position of a third symbol, where the third symbol is a symbol where a synchronization signal block SSB is located; and
a first frequency domain range, where the first frequency domain range is a frequency domain range available for UL signal transmission on one symbol.

In one implementation, the first symbol includes the SBFD symbol and the non-SBFD symbol, and the first condition includes at least one of following:
at least one symbol of the second symbol is a downlink symbol;
at least one symbol of the second symbol overlaps with the third symbol;
at least one symbol of the second symbol overlaps with the third symbol, and an overlapping symbol is the non-SBFD symbol;
at least one symbol of the second symbol overlaps with the third symbol, and the overlapping symbol is the SBFD symbol, and the terminal satisfies a second condition, where the second condition is that the terminal receives the SSB on the third symbol for measuring; and
on at least one symbol of the second symbol, a second frequency domain range without partially or fully overlapping with the first frequency domain range is a frequency domain range of the UL signal on the second symbol.

In one implementation, the first symbol includes the SBFD symbol, and the first condition includes at least one of following:
at least one symbol of the second symbol is a downlink symbol;
at least one symbol of the second symbol is the non-SBFD symbol;
all the second symbol are the non-SBFD symbol;
at least one symbol of the second symbol overlaps with the third symbol;
at least one symbol of the second symbol overlaps with the third symbol, and an overlapping symbol is the non-SBFD symbol;
at least one symbol of the second symbol overlaps with the third symbol, and the overlapping symbol is the SBFD symbol, and the terminal satisfies a second condition, where the second condition is that the terminal receives the SSB on the third symbol for measuring; and
on at least one symbol of the second symbol, a second frequency domain range without partially or fully overlapping with the first frequency domain range is a frequency domain range of the UL signal on the second symbol.

In one implementation, the first symbol includes the non-SBFD symbol, and the first condition includes at least one of following:
at least one symbol of the second symbol is a downlink symbol;
at least one symbol of the second symbol is the downlink symbol or the SBFD symbol; and
at least one symbol of the second symbol overlaps with the third symbol.

According to a fifth aspect of some embodiments of the present disclosure, an uplink communication apparatus is provided, where the apparatus includes: a processor; and a memory configured to store processor-executable instructions; where the processor is configured to perform the uplink communication method according to any embodiment of the first aspect.

According to a sixth aspect of some embodiments of the present disclosure, an uplink communication apparatus is provided, where the apparatus includes: a processor; and a memory, configured to store processor-executable instructions; where the processor is configured to perform the uplink communication method according to any embodiment of the second aspect.

According to a seventh aspect of some embodiments of the present disclosure, a storage medium is provided, when the instructions in the storage medium are executed by a processor of a terminal, the terminal performs the uplink communication method according to the first aspect.

According to an eighth aspect of some embodiments of the present disclosure, a storage medium is provided, when the instructions in the storage medium are executed by a processor of a network device, the network device performs the uplink communication method according to the second aspect.

The technical solution provided by some embodiments of the present disclosure may include the following beneficial effects: through the first information, the terminal is determined to transmit UL signals in M time slots; through the second information, whether the terminal can transmit UL signals on SBFD symbols and non-SBFD symbols at the same time is determined; and the first time slot when the terminal actually transmits UL on SBFD symbols and/or non-SBFD symbols is determined based on the first information and the second information, thereby determining the time slot where the UL signal is transmitted, and ensuring that the terminal transmits the UL signal on the correct time slot. It should be understood that the above general description and the detailed description below are only exemplary and explanatory, and cannot limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram of a wireless communication system according to an exemplary embodiment.
FIG. 2 is a schematic diagram of a time slot according to an exemplary embodiment.
FIG. 3 is a flow chart of an uplink communication method according to an exemplary embodiment.
FIG. 4 is a flow chart of an uplink communication method according to an exemplary embodiment.
FIG. 5 is a flow chart of an uplink communication method according to an exemplary embodiment.
FIG. 6 is a block diagram of an uplink communication apparatus according to an exemplary embodiment.
FIG. 7 is a block diagram of an uplink communication apparatus according to an exemplary embodiment.
FIG. 8 is a block diagram of an apparatus used for uplink communication according to an exemplary embodiment.
FIG. 9 is a block diagram of an apparatus according to an exemplary embodiment.

### DETAILED DESCRIPTION

Here, exemplary embodiments will be described in detail, examples of which are shown in the accompanying drawings. When the following description refers to the drawings, unless otherwise indicated, the same numbers in different drawings represent the same or similar elements. The implementations described in the following exemplary embodiments do not represent all implementations consistent with the present disclosure.

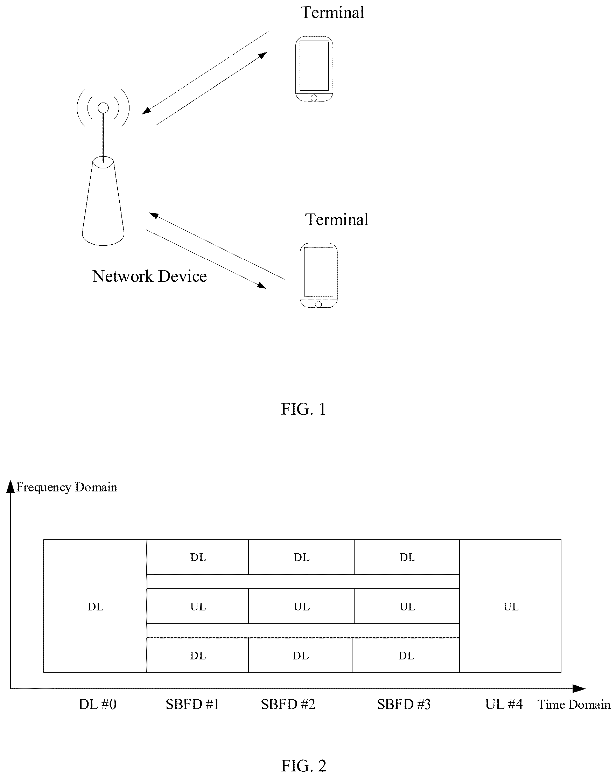

The communication method provided by some embodiments of the present disclosure can be applied to the wireless communication system shown in FIG. 1. Referring to FIG. 1, the wireless communication system includes a network device and a terminal. The terminal is connected to the network device through wireless resources and performs data transmission.

It can be understood that the wireless communication system shown in FIG. 1 is only for schematic illustration, and the wireless communication system may also include other network devices, such as core network devices, wireless relay devices, and wireless backhaul devices, which are not shown in FIG. 1. These embodiments of the present disclosure do not limit the number of network devices and terminals included in the wireless communication system.

It can be further understood that the wireless communication system of some embodiments of the present disclosure is a network that provides wireless communication functions. Different communication technologies can be adopted in the wireless communication system, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), carrier sense multiple access/collision avoidance. According to capacity, rate, delay and other factors of different networks, the network can be divided into 2G (generation) network, 3G network, 4G network or future evolution network, such as 5G network. The 5G network can also be called new radio network (New Radio, NR). For the convenience of description, wireless communication networks are sometimes simply referred to as networks in the present disclosure.

Further, the network device involved in the present disclosure may also be referred to as a wireless access network device. The wireless access network device may be: a base station, an evolved node B (base station), a home base station, an access point (AP) in a wireless fidelity (WIFI) system, a wireless relay node, a wireless backhaul node, a transmission point (TP) or a transmission and reception point (TRP), and the like. It may also be a gNB in an NR system, or it may also be components of the base station or part of the device, and the like. It should be understood that in these embodiments of the present disclosure, the specific technology and specific device form adopted by the network device are not limited. In the present disclosure, the network device may provide communication coverage for a specific geographical area, and may communicate with a terminal located in the coverage area (cell). In addition, in a vehicle-to-everything (V2X) communication system, the network device may also be a vehicle-mounted device.

Furthermore, the terminal involved in the present disclosure may also be referred to as a terminal device, user equipment (UE), mobile station (MS), mobile terminal (MT), and the like, which is a device that provides voice and/or data connectivity to users. For example, the terminal may be a handheld device, a vehicle-mounted device, and the like, with wireless connection function. At present, some examples of terminals are: mobile phones, customer premise device, pocket personal computers (PPCs), handheld computers, personal digital assistants (PDAs), laptops, tablet computers, wearable devices, or vehicle-mounted devices, and the like. In addition, in a vehicle-to-everything (V2X) communication system, the terminal device may also be a vehicle-mounted device. It should be understood that these embodiments of the present disclosure do not limit the specific technology and specific device form adopted by the terminal.

In order to improve uplink (UL) coverage and throughput, subband full duplex (SBFD) is introduced. A carrier component (CC) can be divided into multiple subbands (SBs) in the frequency domain on a downlink (DL) symbol or a flexible (F) symbol. The multiple SBs may include one UL subband and at least one DL subband, for example, multiple SBs include 1 or 2 DL subband(s). The network device can transmit DL signals in the DL subband and receive UL signals in the UL subband at the same time. The DL symbol or UL symbol is configured by the time division duplex-uplink-downlink-common configuration parameter (TDD-UL-DL-ConfigCommon) or the time division duplex-uplink-downlink-dedicated configuration parameter (TDD-UL-DL-ConfigDedicated), or indicated by the downlink control information format 2-0 (DCI).

When a symbol includes both the DL subband and the UL subband in the frequency domain, the symbol is called an SBFD symbol. When multiple symbols in one time slot includes at least one SBFD symbol, the time slot can be called an SBFD time slot. Optionally, when all the multiple symbols in one time slot are SBFD symbols, the time slot can be called an SBFD time slot. Referring to FIG. 2, time slot #0 is a DL time slot, time slots #1-3 are SBFD time slots, and time slot #4 is a UL time slot. In addition, a guard band (GB) can be included between the DL subband and the UL subband in the SBFD symbol. The GB is used for frequency domain isolation to reduce interference between the DL signal in the DL subband and the UL signal in the UL subband.

In the SBFD symbol, the DL subband and GB are unavailable for UL transmission. Moreover, the frequency domain ranges available for UL transmission in the SBFD time slot and the UL time slot are different.

However, whether the terminal can transmit UL signals in SBFD symbols/time slots and non-SBFD symbols/time slots at the same time is an issue of concern.

In view of above, some embodiments of the present disclosure provides an uplink communication method, including: determining that the terminal transmits UL signals in M time slots through the first information, determining whether the terminal can transmit UL signals on SBFD symbols and non-SBFD symbols at the same time through the second information, and determining the first time slot when the terminal actually transmits UL on SBFD symbols and/or non-SBFD symbols based on the first information and the second information, thereby determining the time slot where the UL signal is transmitted, and ensuring that the terminal transmits the UL signal on the correct time slot.

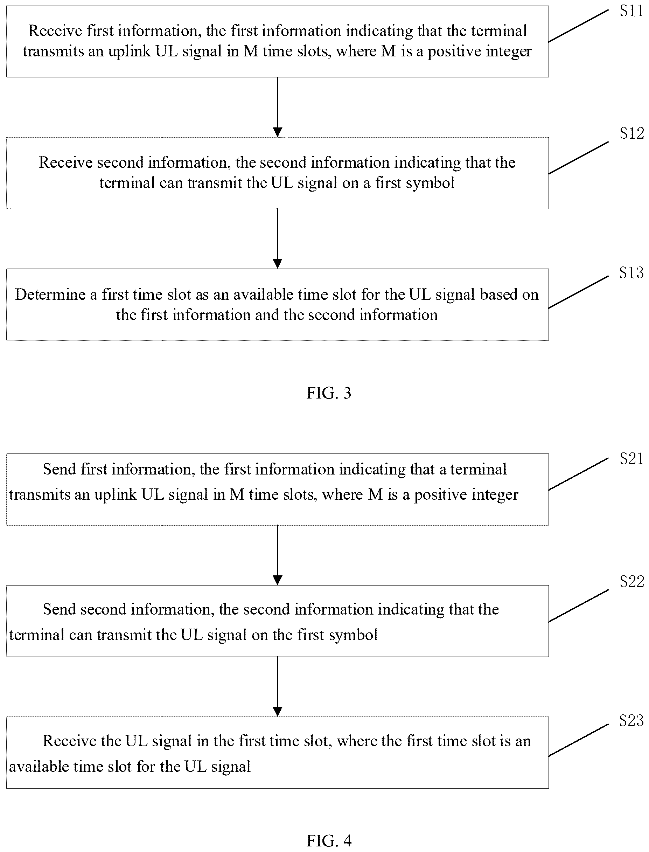

FIG. 3 is a flow chart of an uplink communication method according to an exemplary embodiment. Referring to FIG. 3, the uplink communication method is used in a terminal and includes the following steps.

In step S11, first information is received, the first information indicating that the terminal transmits an uplink UL signal in M time slots, where M is a positive integer. In some embodiments, the UL signal is a physical uplink shared channel (PUSCH). DCI indicates/RRC configures the terminal to transmit PUSCH in M time slots.

In some embodiments, the terminal enhances PUSCH coverage performance by PUSCH repetition type A with available slot counting or transport block over multiple slots (TBoMS).

In some embodiments, when the terminal transmits PUSCH using PUSCH repetition type A, M time slots are determined based on the number of times of repeated transmissions and the number of time slots for repeated transmissions.

In one implementation, the number of times of repeated transmissions is determined based on one or more configuration parameters in RRC, such as the number of repetitions (numberOfRepetitions-r16), the PUSCH aggregation factor (pusch-AggregationFactor), and repK.

For example, numberOfRepetitions-r16 can be configured with ENUMERATED {n1, n2, n3, n4, n7, n8, n12, n16}, where n1 indicates that PUSCH is repeatedly transmitted once, and n8 indicates that PUSCH is repeatedly transmitted eight times.

In one implementation, if available slot counting transmission (availableSlotCounting-r17) is not configured, the terminal transmits PUSCH in M=N*K consecutive time slots; if availableSlotCounting-r17 is configured, the terminal transmits PUSCH in M=N*K time slots.

In one implementation, N defaults to 1. For dynamic grant PUSCH repetition type A, if numberOfRepetitions-r16 is configured in RRC, K=numberOfRepetitions-r16; if pusch-AggregationFactor is configured in RRC, K=pusch-AggregationFactor; if neither numberOfRepetitions-r16 nor pusch-AggregationFactor is configured in RRC, K=1.

In one implementation, N defaults to 1. For type 1/type 2 configured grant, CG-PUSCH repetition type A, if numberOfRepetitions-r16 is configured in RRC, K=numberOfRepetitions-r16; if repK is configured in RRC, K=repK.

In some embodiments, when the terminal adopts TBoMS with/without repetition to transmit PUSCH, the M time slots are determined based on the number of times of repeated transmissions and the number of time slots used by 1 TB.

In one implementation, the number of times of repeated transmissions is determined based on configuration parameters such as numberOfSlotsTBoMS-r17 and numberOfRepetitions-r16 in RRC.

For example, if numberOfSlotsTBoMS-R17 is configured in RRC, one PUSCH is transmitted in N=numberOfSlotsTBoMS-R17 time slots, i.e. one TB is sent in N time slots; if numberOfRepetitions-r16 is configured in RRC, then K=numberOfRepetitions-r16, otherwise K=1. The terminal transmits PUSCH in M=N*K time slots.

In step S12, second information is received, the second information indicating that the terminal can transmit the UL signal on a first symbol.

In some embodiments, the first symbol includes an SBFD symbol, or the first symbol includes a non-SBFD symbol, or the first symbol includes an SBFD symbol and a non-SBFD symbol.

In some embodiments, non-SBFD symbols include UL symbols, DL symbols, and F symbols.

In one implementation, the first symbol includes an SBFD symbol, and the terminal can transmit UL signals on the SBFD symbol but cannot transmit UL signals on non-SBFD symbols. In one implementation, the first symbol includes a non-SBFD symbol, and the terminal can transmit UL signals on the non-SBFD symbol but cannot transmit UL signals on the SBFD symbol. In one implementation, the first symbol includes an SBFD symbol and a non-SBFD symbol, and the terminal can transmit UL signals on the SBFD symbol and the non-SBFD symbol.

In some embodiments, step S12 is optional, and the terminal may pre-store second information, where the second information is pre-configured by the network device or specified by the protocol.

In step S13, the first time slot is determined as an available time slot for the UL signal based on the first information and the second information.

In some embodiments, the terminal determines M1 first time slots from the M consecutive time slots for UL signal transmission.

In one implementation, the first information may further indicate the index of time slot #m+1, and in time slot #m+1 to time slot #m+M, the terminal determines M1 first time slots, transmits M1 times UL signals in the M1 first time slots, and M1 is less than or equal to M. For example, in a PUSCH repetition type A without available slot counting scenario, and availableSlotCounting-r17 is not configured.

In some embodiments, the terminal determines M first time slots from the M2 consecutive time slots for UL signal transmission.

In one implementation, the first information may also indicate the index of time slot #m+1, and the terminal determines M first time slots starting from time slot #m+1, transmits M times UL signals in the M first time slots, and M2 is greater than or equal to M. For example, in a PUSCH repetition type A with available slot counting scenario, availableSlotCounting-r17 is configured. For another example, in a transport block over multiple slots (TBoMS) scenario, regardless of whether repetition is configured (with/without repetition).

In the above implementation, whether a time slot is the first time slot is to be determined.

In some embodiments of the present disclosure, through the first information, the terminal is determined to transmit UL signals in M time slots; through the second information, whether the terminal can transmit UL signals on SBFD symbols and non-SBFD symbols at the same time is determined; and the first time slot when the terminal actually transmits UL on SBFD symbols and/or non-SBFD symbols is determined based on the first information and the second information, thereby determining the time slot where the UL signal is transmitted, and ensuring that the terminal transmits the UL signal on the correct time slot.

In an uplink communication method provided by some embodiments of the present disclosure, the first time slot is determined as the available time slot for the UL signal based on a first condition by the terminal.

In some embodiments, the first condition is used for determining the second time slot.

In some embodiments, the second time slot is an unavailable time slot for UL signals.

In an uplink communication method provided in some embodiments of the present disclosure, the first condition is determined based on at least one of the following:
the category of the second symbol;
the position of the third symbol; and
the first frequency domain range.

In some embodiments, the first condition is determined based on a category of the second symbol.

The second symbol is a symbol of the UL signal in one time slot. It can also be understood that the second symbol is a symbol included in the time slot where the UL signal is transmitted.

The category of the second symbol indicates the category of the symbol that can be used for transmitting a signal.

In one implementation, the category of the second symbol includes a UL category, a DL category, a flexible category, or an SBFD category.

For example, the second symbol is a UL symbol, and the category of the second symbol is the UL category, and the second symbol can be used for transmitting a UL signal.

In some embodiments, the first condition is determined based on a position of the third symbol.

The third symbol is the symbol where the synchronization signal/physical broadcast channel block (SSB) is located. Sometimes SSB can also be referred to as a synchronization broadcast block.

In one implementation, the position of the third symbol indicates the position of the symbol where the SSB is located.

In some embodiments, the first condition is determined based on a first frequency domain range.

The first frequency domain range is a frequency domain range that can be used for UL signal transmission on one symbol.

Exemplarily, if a symbol is a UL symbol, the first frequency domain range is a frequency domain range on the UL symbol that can be used for UL signal transmission. In another exemplary embodiment, if a symbol is an SBFD symbol, the first frequency domain range is a frequency domain range corresponding to a UL subband in the SBFD symbol that can be used for UL signal transmission.

In an embodiment of the present disclosure, the first condition can be determined based on one or more of the categories of the second symbol, the third symbol, and the first frequency domain range, and has multiple combinations. These embodiments of the present disclosure do not limit this. The first condition will be described below in the form of exemplary embodiments.

In an uplink communication method provided by some embodiments of the present disclosure, the first symbol includes an SBFD symbol and a non-SBFD symbol, and the first condition includes at least one of the following:
A. at least one symbol of the second symbol is a downlink symbol;
B. at least one symbol of the second symbol overlaps with the third symbol;
C. at least one symbol of the second symbol overlaps with the third symbol, and the overlapping symbol is the non-SBFD symbol;
D. at least one symbol of the second symbol overlaps with the third symbol, and the overlapping symbol is the SBFD symbol, and the terminal satisfies a second condition, where the second condition is that the terminal receives the SSB on the third symbol for measuring; and
E. on at least one symbol of the second symbol, a second frequency domain range without partially or fully overlapping with the first frequency domain range is a frequency domain range of the UL signal on the second symbol.

In some embodiments, the first symbol includes SBFD symbols and non-SBFD symbols, and the first condition is that at least one symbol of the second symbol is a downlink symbol.

Exemplarily, if at least one symbol of the second symbol is the downlink symbol, the at least one downlink symbol cannot perform UL signal transmission, and it is further determined that the time slot corresponding to the at least one downlink symbol is an unavailable time slot, i.e. the second time slot, and the second time slot is not counted.

In some embodiments, the first symbol includes SBFD symbols and non-SBFD symbols, and the first condition is that at least one symbol of the second symbol overlaps with the third symbol.

Exemplarily, when the UL signal is located in the 2^{nd} time slot, there is at least one symbol in the 2^{nd} time slot for transmitting SSB, then the 2^{nd} time slot is an unavailable time slot, i.e. the second time slot.

The SSB is the DL signal sent by the network device. The terminal can receive SSB for measurement and obtain the strength of the received SSB signal for purposes such as cell switching.

In some embodiments, the first symbol includes SBFD symbols and non-SBFD symbols, and the first condition is that at least one symbol of the second symbols overlaps with the third symbol, and the overlapping symbol is the non-SBFD symbol.

Since SSB is a DL signal sent by the network device, considering that the network device can transmit DL signals and receive UL signals at the same time on SBFD symbols, if the at least one symbol is an SBFD symbol, the terminal can transmit UL signals; if the at least one symbol is a DL symbol, considering that the network device can only transmit DL signals on DL symbols and cannot receive UL signals, the terminal device does not transmit UL signals.

Exemplarily, when the UL signal is located in the 2^{nd} time slot, there is at least one symbol in the 2^{nd} time slot for transmitting SSB, and the at least one symbol is a non-SBFD symbol, then the 2^{nd} time slot is an unavailable time slot, i.e. the second time slot.

In some embodiments, the first symbol includes SBFD symbols and non-SBFD symbols, the first condition is that at least one symbol of the second symbols overlaps with the third symbol, and the overlapping symbol is an SBFD symbol, and the terminal satisfies the second condition, where the second condition is that the terminal receives the SSB on the third symbol for measuring.

Since SSB is a DL signal sent by the network device, considering that the network device can transmit DL signals and receive UL signals at the same time on SBFD symbols. If the at least one symbol is an SBFD symbol and the terminal determines not to receive SSB for measurement, the terminal can transmit UL signals; if the at least one symbol is a non-SBFD symbol, such as a DL symbol or an F symbol, considering that the network device can perform DL transmission or UL reception on DL symbols or F symbols, but when transmitting SSB signals, the network device cannot receive UL signals. Accordingly, the terminal device does not transmit UL signals.

Exemplarily, when the UL signal is located in the 2^{nd} time slot, there is at least one symbol in the 2^{nd} time slot for transmitting SSB, and the at least one symbol is an SBFD symbol, it is further determined whether the terminal receives the SSB and performs measurement on the symbol where the SSB is located. If it is determined that the terminal receives the SSB and performs measurement on the symbol where the SSB is located, the 2^{nd} time slot is determined as an unavailable time slot, i.e. the second time slot.

In some embodiments, the first symbol includes SBFD symbols and non-SBFD symbols, and the first condition is that on at least one symbol of the second symbol, a second frequency domain range without partially or fully overlapping with the first frequency domain range is a frequency domain range of the UL signal on the second symbol.

Exemplarily, the first frequency domain range that can be used for UL signal transmission on one symbol is 4.0-4.2 GHz, and the second frequency domain range of the UL signal on the second symbol is 4.1-4.3 GHz. Then, there are partially non-overlapping frequency domains between the first frequency domain range and the second frequency domain range, and the time slot corresponding to the one symbol is an unavailable time slot.

In these embodiments of the present disclosure, the first condition can be determined based on one or more of the above A to E, and has various combinations. For example, the first condition can include A and B, and the first condition can also include A, C, E, and the like. These embodiments of the present disclosure do not limit this and will not elaborate on them one by one.

In an uplink communication method provided by some embodiments of the present disclosure, the first symbol includes an SBFD symbol, and the first condition includes at least one of the following:
a. at least one symbol of the second symbol is a downlink symbol;
b. at least one symbol of the second symbol is a non-SBFD symbol;
c. all the second symbols are the non-SBFD symbols;
d. at least one symbol of the second symbol overlaps with the third symbol;
e. at least one symbol of the second symbol overlaps with the third symbol, and an overlapping symbol is the non-SBFD symbol;
f. at least one symbol of the second symbol overlaps with the third symbol, and the overlapping symbol is the SBFD symbol, and the terminal satisfies a second condition, where the second condition is that the terminal receives the SSB on the third symbol for measuring; and
g. on at least one symbol of the second symbol, a second frequency domain range without partially or fully overlapping with the first frequency domain range is a frequency domain range of the UL signal on the second symbol.

In some embodiments, the first symbol includes SBFD symbols, and the first condition is that at least one symbol of the second symbols is a downlink symbol.

Exemplarily, if at least one symbol of the second symbols is the downlink symbol, the at least one downlink symbol cannot perform UL signal transmission, and it is further determined that the time slot corresponding to the at least one downlink symbol is an unavailable time slot, i.e. the second time slot, and the second time slot is not counted.

In some embodiments, the first symbol includes SBFD symbols, and the first condition is that at least one symbol of the second symbols is a non-SBFD symbol.

Exemplarily, if at least one symbol of the second symbols is the non-SBFD symbol, since the UL signal can only be sent on the SBFD symbol, the time slots corresponding to the non-SBFD symbols are unavailable time slots.

In some embodiments, the first symbol includes an SBFD symbol, and the first condition is that all the second symbols are non-SBFD symbols.

Exemplarily, if all the second symbols are non-SBFD symbols, since UL signals can only be sent on SBFD symbols, the time slots corresponding to the non-SBFD symbols are unavailable time slots.

In some embodiments, the first symbol includes an SBFD symbol, and the first condition is that at least one symbol of the second symbols overlaps with the third symbol.

In some embodiments, the first symbol includes an SBFD symbol, and the first condition is that at least one symbol of the second symbols overlaps with the third symbol, and the overlapping symbols are non-SBFD symbols.

In some embodiments, the first symbol includes an SBFD symbol, the first condition is that at least one symbol of the second symbol overlaps with the third symbol, and the overlapping symbols are SBFD symbols, and the terminal satisfies the second condition, and the second condition is that the terminal receives SSB on the third symbol for measurement.

In some embodiments, the first symbol includes an SBFD symbol, the first condition is that on at least one symbol of the second symbol, the second frequency domain range without partially or fully overlapping with the first frequency domain range is a frequency domain range of the UL signal on the second symbol.

In some embodiments of the present disclosure, with respect to the specific implementation contents of conditions e to g, the specific implementation contents of the above conditions B to E can be referred to, and will not be elaborated here.

In some embodiments of the present disclosure, the first condition can be determined based on one or more of the above a to g, and has various combinations. For example, the first condition can include a and c, and the first condition can also include b, d, e, and the like. These embodiments of the present disclosure do not limit this and will not elaborate on them one by one.

In an uplink communication method provided by some embodiments of the present disclosure, the first symbol includes a non-SBFD symbol, and the first condition includes at least one of the following:
1. at least one symbol of the second symbol is a downlink symbol;
2. at least one symbol of the second symbol is the downlink symbol or the SBFD symbol; and
3. at least one symbol of the second symbol overlaps with the third symbol.

In some embodiments, the first symbol includes a non-SBFD symbol, and the first condition is that at least one symbol of the second symbols is a downlink symbol.

In some embodiments, the first symbol includes a non-SBFD symbol, and the first condition is that at least one symbol of the second symbols is a downlink symbol or an SBFD symbol.

In some embodiments, the first symbol includes a non-SBFD symbol, and the first condition is that at least one symbol of the second symbols overlaps with the third symbol.

In some embodiments of the present disclosure, the first condition can be determined based on one or more of 1 to 3 above, and has various combinations. For example, the first condition can include 1 and 2, and the first condition can also include 2 and 3, and the like. These embodiments of the present disclosure do not limit this and will not elaborate on them one by one.

In the above embodiments, for different symbols supported for transmission of UL signals, the conditions for determining unavailable time slots under different symbols are respectively introduced, so that the terminal can determine the unavailable time slots based on the conditions, and then determine the time slot where the UL signal is transmitted, thereby ensuring that the terminal transmits the UL signal in the correct time slot.

Based on the same concept, some embodiments of the present disclosure further provide an uplink communication method performed by a network device.

FIG. 4 is a flow chart of an uplink communication method according to an exemplary embodiment. Referring to FIG. 4, the uplink communication method is used in a network device and includes the following steps.

In step S21, first information is sent, the first information indicating that the terminal transmits an uplink UL signal in M time slots, where M is a positive integer.

The specific implementation of step S21 can refer to the specific implementation of step S11 in FIG. 3, and will not be elaborated in these embodiments of the present disclosure.

In step S22, second information is sent, the second information indicating that the terminal can transmit the UL signal on the first symbol.

In some embodiments, the first symbol includes an SBFD symbol, or the first symbol includes a non-SBFD symbol, or the first symbol includes an SBFD symbol and a non-SBFD symbol.

In some embodiments, step S22 is optional, and the terminal may pre-store second information, where the second information is pre-configured by the network device or specified by the protocol.

The specific implementation of step S22 can refer to the specific implementation of step S12 in FIG. 3, and will not be elaborated in these embodiments of the present disclosure.

In step S23, a UL signal is received in a first time slot, where the first time slot is an available time slot for the UL signal.

In some embodiments, the network device determines M1 first time slots from the M consecutive time slots to receive the UL signal.

In one implementation, the first information may further indicate an index of time slot #m+1, and in time slot #m+1 to time slot #m+M, the network device determines that M1 first time slots exist, receives M1 times UL signals in M1 first time slots, and M1 is less than or equal to M. For example, in a PUSCH repetition type A without available slot counting scenario, and availableSlotCounting-r17 is not configured.

In some embodiments, the network device determines M first time slots from the M2 consecutive time slots to receive the UL signal.

In one implementation, the first information may also indicate the index of time slot #m+1, the network device determines M first time slots starting from time slot #m+1, receives M times UL signals in the M first time slots, and M2 is greater than or equal to M. For example, in a PUSCH repetition type A with available slot counting scenario, availableSlotCounting-r17 is configured. For another example, in a transport block over multiple slots (TBoMS) scenario, regardless of whether repetition is configured (with/without repetition).

In the above implementation, the terminal is to determine whether one time slot is the first time slot.

The specific implementation of step S23 can refer to the specific implementation of step S13 in FIG. 3, and will not be elaborated in these embodiments of the present disclosure.

In some embodiments of the present disclosure, the network device enables, by sending the first information, the terminal to determine that UL signal is transmitted on M time slots; and enables, by sending the second information, the terminal to determine whether it can transmit UL signals on SBFD symbols and non-SBFD symbols at the same time; and receives the UL signal in the first time slot, thereby improving the accuracy rate of receiving UL signals sent by the terminal.

In an uplink communication method provided by some embodiments of the present disclosure, a first time slot is determined based on a first condition.

In some embodiments, the first condition is used for determining the second time slot.

In some embodiments, the second time slot is an unavailable time slot for UL signals.

In an uplink communication method provided in some embodiments of the present disclosure, the first condition is determined based on at least one of the following:
the category of the second symbol;
the position of the third symbol; and
the first frequency domain range.

In some embodiments, the first condition is determined based on a category of the second symbol.

The second symbol is a symbol of the UL signal in one time slot. It can also be understood that the second symbol is a symbol included in the time slot where the UL signal is transmitted.

The category of the second symbol indicates the category of the symbol that can be used for transmitting a signal.

In one implementation, the category of the second symbol includes a UL category, a DL category, a flexible category, or an SBFD category.

For example, the second symbol is a UL symbol, and the category of the second symbol is the UL category, and the second symbol can be used for transmitting a UL signal.

In some embodiments, the first condition is determined based on a position of the third symbol.

The third symbol is the symbol where the synchronization signal/physical broadcast channel block (SSB) is located. Sometimes SSB can also be referred to as a synchronization broadcast block.

In one implementation, the position of the third symbol indicates the position of the symbol where the SSB is located.

In some embodiments, the first condition is determined based on a first frequency domain range.

The first frequency domain range is a frequency domain range that can be used for UL signal transmission on one symbol.

Exemplarily, if a symbol is a UL symbol, the first frequency domain range is a frequency domain range on the UL symbol that can be used for UL signal transmission. In another exemplary embodiment, if a symbol is an SBFD symbol, the first frequency domain range is a frequency domain range corresponding to a UL subband in the SBFD symbol that can be used for UL signal transmission.

In an embodiment of the present disclosure, the first condition can be determined based on one or more of the categories of the second symbol, the third symbol, and the first frequency domain range, and has multiple combinations. These embodiments of the present disclosure do not limit this. The first condition will be described below in the form of exemplary embodiments.

In an uplink communication method provided by some embodiments of the present disclosure, the first symbol includes an SBFD symbol and a non-SBFD symbol, and the first condition includes at least one of the following:
A. at least one symbol of the second symbol is a downlink symbol;
B. at least one symbol of the second symbol overlaps with the third symbol;
C. at least one symbol of the second symbol overlaps with the third symbol, and the overlapping symbol is the non-SBFD symbol;
D. at least one symbol of the second symbol overlaps with the third symbol, and the overlapping symbol is the SBFD symbol, and the terminal satisfies a second condition, where the second condition is that the terminal receives the SSB on the third symbol for measuring; and
E. on at least one symbol of the second symbol, a second frequency domain range without partially or fully overlapping with the first frequency domain range is a frequency domain range of the UL signal on the second symbol.

In some embodiments, the first symbol includes SBFD symbols and non-SBFD symbols, and the first condition is that at least one symbol of the second symbol is a downlink symbol.

Exemplarily, if at least one symbol of the second symbol is the downlink symbol, the at least one downlink symbol cannot perform UL signal transmission, and it is further determined that the time slot corresponding to the at least one downlink symbol is an unavailable time slot, i.e. the second time slot, and the second time slot is not counted.

In some embodiments, the first symbol includes SBFD symbols and non-SBFD symbols, and the first condition is that at least one symbol of the second symbol overlaps with the third symbol.

Exemplarily, when the UL signal is located in the 2^{nd} time slot, there is at least one symbol in the 2^{nd} time slot for transmitting SSB, then the 2^{nd} time slot is an unavailable time slot, that is, the second time slot.

The SSB is the DL signal sent by the network device. The terminal can receive SSB for measurement and obtain the strength of the received SSB signal for purposes such as cell switching.

In some embodiments, the first symbol includes SBFD symbols and non-SBFD symbols, and the first condition is that at least one symbol of the second symbols overlaps with the third symbol, and the overlapping symbol is the non-SBFD symbol.

Since SSB is a DL signal sent by the network device, considering that the network device can transmit DL signals and receive UL signals at the same time on SBFD symbols, if the at least one symbol is an SBFD symbol, the terminal can transmit UL signals; if the at least one symbol is a DL symbol, considering that the network device can only transmit DL signals on DL symbols and cannot receive UL signals, the terminal device does not transmit UL signals.

Exemplarily, when the UL signal is located in the 2^{nd} time slot, there is at least one symbol in the 2^{nd} time slot for transmitting SSB, and the at least one symbol is a non-SBFD symbol, then the 2^{nd} time slot is an unavailable time slot, i.e. the second time slot.

In some embodiments, the first symbol includes SBFD symbols and non-SBFD symbols, the first condition is that at least one symbol of the second symbols overlaps with the third symbol, and the overlapping symbol is an SBFD symbol, and the terminal satisfies the second condition, where the second condition is that the terminal receives the SSB on the third symbol for measuring.

Since SSB is a DL signal sent by the network device, considering that the network device can transmit DL signals and receive UL signals at the same time on SBFD symbols. If the at least one symbol is an SBFD symbol and the terminal determines not to receive SSB for measurement, the terminal can transmit UL signals; if the at least one symbol is a non-SBFD symbol, such as a DL symbol or an F symbol, considering that the network device can perform DL transmission or UL reception on DL symbols or F symbols, but when transmitting SSB signals, the network device cannot receive UL signals. Accordingly, the terminal device does not transmit UL signals.

Exemplarily, when the UL signal is located in the 2^{nd} time slot, there is at least one symbol in the 2^{nd} time slot for transmitting SSB, and the at least one symbol is an SBFD symbol, it is further determined whether the terminal receives the SSB and performs measurement on the symbol where the SSB is located. If it is determined that the terminal receives the SSB and performs measurement on the symbol where the SSB is located, the 2^{nd} time slot is determined as an unavailable time slot, i.e. the second time slot.

In some embodiments, the first symbol includes SBFD symbols and non-SBFD symbols, and the first condition is that on at least one symbol of the second symbol, a second frequency domain range without partially or fully overlapping with the first frequency domain range is a frequency domain range of the UL signal on the second symbol.

Exemplarily, the first frequency domain range that can be used for UL signal transmission on one symbol is 4.0-4.2 GHz, and the second frequency domain range of the UL signal on the second symbol is 4.1-4.3 GHz. Then, there are partially non-overlapping frequency domains between the first frequency domain range and the second frequency domain range, and the time slot corresponding to the one symbol is an unavailable time slot.

In these embodiments of the present disclosure, the first condition can be determined based on one or more of the above A to E, and has various combinations. For example, the first condition can include A and B, and the first condition can also include A, C, E, and the like. These embodiments of the present disclosure do not limit this and will not elaborate on them one by one.

In an uplink communication method provided by some embodiments of the present disclosure, the first symbol includes an SBFD symbol, and the first condition includes at least one of the following:
a. at least one symbol of the second symbol is a downlink symbol;
b. at least one symbol of the second symbol is a non-SBFD symbol;
c. all the second symbols are the non-SBFD symbols;
d. at least one symbol of the second symbol overlaps with the third symbol;
e. at least one symbol of the second symbol overlaps with the third symbol, and an overlapping symbol is the non-SBFD symbol;
f. at least one symbol of the second symbol overlaps with the third symbol, and the overlapping symbol is the SBFD symbol, and the terminal satisfies a second condition, where the second condition is that the terminal receives the SSB on the third symbol for measuring; and
g. on at least one symbol of the second symbol, a second frequency domain range without partially or fully overlapping with the first frequency domain range is a frequency domain range of the UL signal on the second symbol.

In some embodiments, the first symbol includes SBFD symbols, and the first condition is that at least one symbol of the second symbols is a downlink symbol.

Exemplarily, if at least one symbol of the second symbols is the downlink symbol, the at least one downlink symbol cannot perform UL signal transmission, and it is further determined that the time slot corresponding to the at least one downlink symbol is an unavailable time slot, i.e. the second time slot, and the second time slot is not counted.

In some embodiments, the first symbol includes SBFD symbols, and the first condition is that at least one symbol of the second symbols is a non-SBFD symbol.

Exemplarily, if at least one symbol of the second symbols is the non-SBFD symbol, since the UL signal can only be sent on the SBFD symbol, the time slots corresponding to the non-SBFD symbols are unavailable time slots.

In some embodiments, the first symbol includes an SBFD symbol, and the first condition is that all the second symbols are non-SBFD symbols.

Exemplarily, if all the second symbols are non-SBFD symbols, since UL signals can only be sent on SBFD symbols, the time slots corresponding to the non-SBFD symbols are unavailable time slots.

In some embodiments, the first symbol includes an SBFD symbol, and the first condition is that at least one symbol of the second symbols overlaps with the third symbol.

In some embodiments, the first symbol includes an SBFD symbol, and the first condition is that at least one symbol of the second symbols overlaps with the third symbol, and the overlapping symbols are non-SBFD symbols.

In some embodiments, the first symbol includes an SBFD symbol, the first condition is that at least one symbol of the second symbol overlaps with the third symbol, and the overlapping symbols are SBFD symbols, and the terminal satisfies the second condition, and the second condition is that the terminal receives SSB on the third symbol for measurement.

In some embodiments, the first symbol includes an SBFD symbol, the first condition is that on at least one symbol of the second symbol, the second frequency domain range without partially or fully overlapping with the first frequency domain range is a frequency domain range of the UL signal on the second symbol.

In some embodiments of the present disclosure, with respect to the specific implementation contents of conditions e to g, the specific implementation contents of the above conditions B to E can be referred to, and will not be elaborated here.

In some embodiments of the present disclosure, the first condition can be determined based on one or more of the above a to g, and has various combinations. For example, the first condition can include a and c, and the first condition can also include b, d, e, and the like. These embodiments of the present disclosure do not limit this and will not elaborate on them one by one.

In an uplink communication method provided by some embodiments of the present disclosure, the first symbol includes a non-SBFD symbol, and the first condition includes at least one of the following:
1. at least one symbol of the second symbol is a downlink symbol;
2. at least one symbol of the second symbol is the downlink symbol or the SBFD symbol; and
3. at least one symbol of the second symbol overlaps with the third symbol.

In some embodiments, the first symbol includes a non-SBFD symbol, and the first condition is that at least one symbol of the second symbols is a downlink symbol.

In some embodiments, the first symbol includes a non-SBFD symbol, and the first condition is that at least one symbol of the second symbols is a downlink symbol or an SBFD symbol.

In some embodiments, the first symbol includes a non-SBFD symbol, and the first condition is that at least one symbol of the second symbols overlaps with the third symbol.

In some embodiments of the present disclosure, the first condition can be determined based on one or more of 1 to 3 above, and has various combinations. For example, the first condition can include 1 and 2, and the first condition can also include 2 and 3, and the like. These embodiments of the present disclosure do not limit this and will not elaborate on them one by one.

In the above embodiments, for different symbols supported for transmission of UL signals, the conditions for determining unavailable time slots under different symbols are respectively introduced, so that the terminal can determine the unavailable time slots based on the conditions, and then determine the available time slots, thereby determining the time slots where the UL signal is transmitted, and ensuring that the terminal transmits the UL signal in the correct time slot.

Based on the same concept, some embodiments of the present disclosure further provide an uplink communication method implemented by interaction between a terminal and a network device.

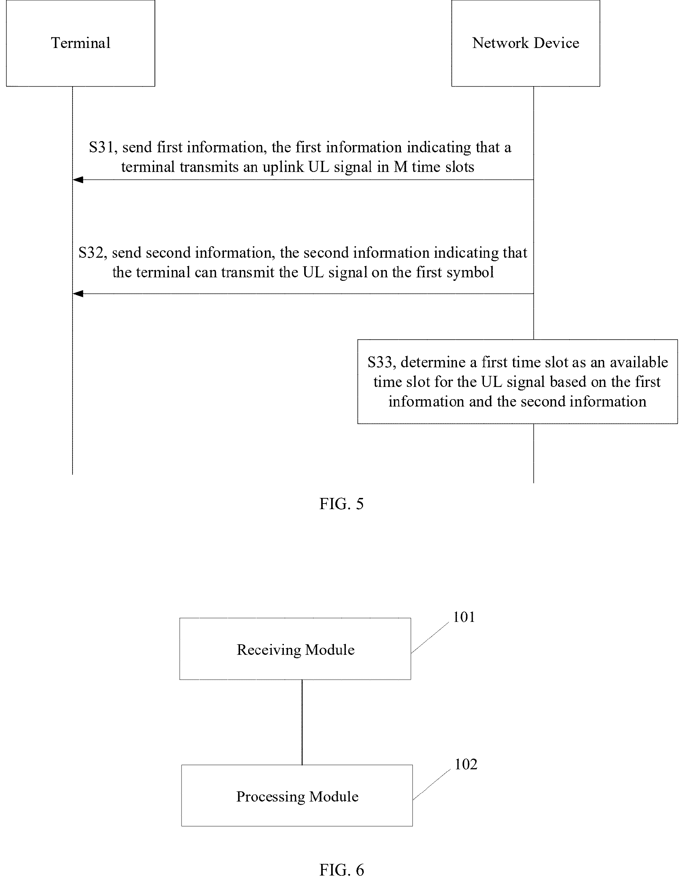

FIG. 5 is a flow chart of an uplink communication method according to an exemplary embodiment. Referring to FIG. 5, the uplink communication method is used in a communication system, and the communication system includes a terminal and a network device, and includes the following steps.

In step S31, the network device sends first information, the first information indicating that the terminal transmits an uplink UL signal in M time slots.

M is a positive integer.

The specific implementation of step S31 may refer to the specific implementation of step S11 in FIG. 3 or step S21 in FIG. 4, and will not be elaborated in these embodiments of the present disclosure.

In step S32, the network device sends second information, the second information indicating that the terminal can transmit the UL signal on the first symbol.

The specific implementation of step S32 may refer to the specific implementation of step S12 in FIG. 3 or step S22 in FIG. 4, and will not be elaborated in these embodiments of the present disclosure.

In step S33, the terminal determines that the first time slot is an available time slot for the UL signal based on the first information and the second information.

The specific implementation of step S33 can refer to the specific implementation of step S13 in FIG. 3, and will not be elaborated in these embodiments of the present disclosure.

In some embodiments of the present disclosure, the network device enables, by sending the first information, the terminal to determine that UL signal is transmitted on M time slots; and enables, by sending the second information, the terminal to determine whether it can transmit UL signals on SBFD symbols and non-SBFD symbols at the same time. The terminal determines the first time slot when the terminal actually transmits UL on SBFD symbols and/or non-SBFD symbols based on the first information and the second information, thereby determining the time slot where the UL signal is transmitted, and ensuring that the terminal transmits the UL signal on the correct time slot.

It should be noted that those skilled in the art can understand that the various implementation methods/embodiments involved in these embodiments of the present disclosure can be used in conjunction with the aforementioned embodiments or can be used independently. Whether used alone or in conjunction with the aforementioned embodiments, the implementation principle is similar. In the implementation of the present disclosure, some embodiments are described in terms of implementation methods used together. Of course, those skilled in the art can understand that such examples are not limitations of the embodiments of the present disclosure.

Based on the same concept, some embodiments of the present disclosure further provide an uplink communication apparatus.

It can be understood that, in order to realize the above functions, the uplink communication apparatus provided by these embodiments of the present disclosure includes hardware structures and/or software modules corresponding to the execution of each function. In combination with the units and algorithm steps of each example disclosed in these embodiments of the present disclosure, these embodiments of the present disclosure can be implemented in the form of hardware or a combination of hardware and computer software. Whether a function is executed in the form of hardware or computer software driving hardware depends on the specific application and design constraints of the technical solution. Those skilled in the art may use different methods to implement the described functions for each specific application, but such implementation should not be considered to exceed the scope of the technical solution of these embodiments of the present disclosure.

FIG. 6 is a block diagram of an uplink communication apparatus according to an exemplary embodiment. Referring to FIG. 6, the apparatus includes a receiving module 101 and a processing module 102.

The receiving module 101 is configured to receive first information, the first information indicating that the terminal transmits an uplink UL signal in M time slots, where M is a positive integer.

The receiving module 101 is further configured to receive second information, the second information indicating that the terminal can transmit the UL signal on a first symbol, where the first symbol includes a subband full duplex SBFD symbol, or the first symbol includes a non-SBFD symbol, or the first symbol includes the SBFD symbol and the non-SBFD symbol.

The processing module 102 is configured to determine a first time slot as an available time slot for the UL signal based on the first information and the second information.

In one implementation, the processing module 102 determines that the first time slot is the available time slot for the UL signal in the following manner:
based on the first condition, the first time slot is determined as the available time slot for the UL signal;
where the first condition is used for determining a second time slot, and the second time slot is an unavailable time slot for the UL signal.

In one implementation, the first condition is determined based on at least one of the following:
a category of a second symbol, where the second symbol is a symbol of the UL signal in one time slot;
a position of a third symbol, where the third symbol is a symbol where a synchronization signal block SSB is located; and
a first frequency domain range, where the first frequency domain range is a frequency domain range available for UL signal transmission on one symbol.

In one implementation, the first symbol includes the SBFD symbol and the non-SBFD symbol, and the first condition includes at least one of following:
at least one symbol of the second symbol is a downlink symbol;
at least one symbol of the second symbol overlaps with the third symbol;
at least one symbol of the second symbol overlaps with the third symbol, and an overlapping symbol is the non-SBFD symbol;
at least one symbol of the second symbol overlaps with the third symbol, and the overlapping symbol is the SBFD symbol, and the terminal satisfies a second condition, where the second condition is that the terminal receives the SSB on the third symbol for measuring; and
on at least one symbol of the second symbol, a second frequency domain range without partially or fully overlapping with the first frequency domain range is a frequency domain range of the UL signal on the second symbol.

In one implementation, the first symbol includes the SBFD symbol, and the first condition includes at least one of following:
at least one symbol of the second symbol is a downlink symbol;
at least one symbol of the second symbol is the non-SBFD symbol;
all the second symbol are the non-SBFD symbol;
at least one symbol of the second symbol overlaps with the third symbol;
at least one symbol of the second symbol overlaps with the third symbol, and an overlapping symbol is the non-SBFD symbol;
at least one symbol of the second symbol overlaps with the third symbol, and the overlapping symbol is the SBFD symbol, and the terminal satisfies a second condition, where the second condition is that the terminal receives the SSB on the third symbol for measuring; and
on at least one symbol of the second symbol, a second frequency domain range without partially or fully overlapping with the first frequency domain range is a frequency domain range of the UL signal on the second symbol.

In one implementation, the first symbol includes the non-SBFD symbol, and the first condition includes at least one of the following:
at least one symbol of the second symbol is a downlink symbol;
at least one symbol of the second symbol is the downlink symbol or the SBFD symbol; and
at least one symbol of the second symbol overlaps with the third symbol.

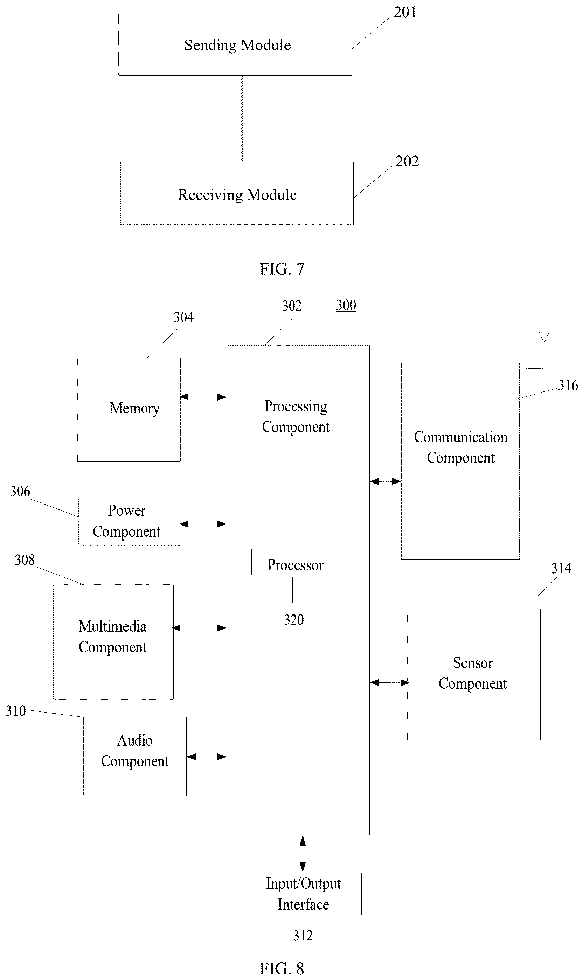

FIG. 7 is a block diagram of an uplink communication apparatus according to an exemplary embodiment. Referring to FIG. 7, the apparatus includes a sending module 201 and a receiving module 202.

The sending module 201 is configured to send first information, the first information indicating that a terminal transmits an uplink UL signal in M time slots, where M is a positive integer.

The sending module 201 is further configured to send second information, the second information indicating that the terminal can transmit the UL signal on the first symbol, where the first symbol including a subband full duplex SBFD symbol, or the first symbol includes a non-SBFD symbol, or the first symbol includes the SBFD symbol and the non-SBFD symbol.

The receiving module 202 is configured to receive the UL signal in the first time slot, where the first time slot is an available time slot for the UL signal.

In one implementation, the first time slot is determined based on a first condition.

The first condition is used for determining a second time slot, and the second time slot is an unavailable time slot for the UL signal.

In one implementation, the first condition is determined based on at least one of the following:
a category of a second symbol, where the second symbol is a symbol of the UL signal in one time slot;
a position of a third symbol, where the third symbol is a symbol where a synchronization signal block SSB is located; and
a first frequency domain range, where the first frequency domain range is a frequency domain range available for UL signal transmission on one symbol.

In one implementation, the first symbol includes the SBFD symbol and the non-SBFD symbol, and the first condition includes at least one of following:
at least one symbol of the second symbol is a downlink symbol;
at least one symbol of the second symbol overlaps with the third symbol;
at least one symbol of the second symbol overlaps with the third symbol, and an overlapping symbol is the non-SBFD symbol;
at least one symbol of the second symbol overlaps with the third symbol, and the overlapping symbol is the SBFD symbol, and the terminal satisfies a second condition, where the second condition is that the terminal receives the SSB on the third symbol for measuring; and
on at least one symbol of the second symbol, a second frequency domain range without partially or fully overlapping with the first frequency domain range is a frequency domain range of the UL signal on the second symbol.

In one implementation, the first symbol includes the SBFD symbol, and the first condition includes at least one of following:
at least one symbol of the second symbol is a downlink symbol;
at least one symbol of the second symbol is the non-SBFD symbol;
all the second symbol are the non-SBFD symbol;
at least one symbol of the second symbol overlaps with the third symbol;
at least one symbol of the second symbol overlaps with the third symbol, and an overlapping symbol is the non-SBFD symbol;
at least one symbol of the second symbol overlaps with the third symbol, and the overlapping symbol is the SBFD symbol, and the terminal satisfies a second condition, where the second condition is that the terminal receives the SSB on the third symbol for measuring; and
on at least one symbol of the second symbol, a second frequency domain range without partially or fully overlapping with the first frequency domain range is a frequency domain range of the UL signal on the second symbol.

In one implementation, the first symbol includes the non-SBFD symbol, and the first condition includes at least one of following:
at least one symbol of the second symbol is a downlink symbol;
at least one symbol of the second symbol is the downlink symbol or the SBFD symbol; and
at least one symbol of the second symbol overlaps with the third symbol.

Regarding the apparatus in the above embodiments, the specific manner in which each module performs operations has been described in detail in the embodiments of the method, and will not be elaborated here.

FIG. 8 is a block diagram of an uplink communication apparatus according to an exemplary embodiment. For example, the apparatus 300 may be a mobile phone, a computer, a digital broadcast terminal, a message transceiver device, a game console, a tablet device, a medical device, a fitness device, a personal digital assistant, and the like.

Referring to FIG. 8, apparatus 300 may include one or more of the following components: a processing component 302, a memory 304, a power component 306, a multimedia component 308, an audio component 310, an input/output (I/O) interface 312, a sensor component 314, and a communication component 316.

The processing component 302 generally controls the overall operation of the apparatus 300, such as operations associated with display, phone calls, data communications, camera operations, and recording operations. The processing component 302 may include one or more processors 320 to execute instructions to implement all or part of the steps of the above-mentioned method. In addition, the processing component 302 may include one or more modules to facilitate the interaction between the processing component 302 and other components. For example, the processing component 302 may include a multimedia module to facilitate the interaction between the multimedia component 308 and the processing component 302.

The memory 304 is configured to store various types of data to support operations on the apparatus 300. Examples of such data include instructions, contact data, phone book data, messages, pictures, videos, and the like, for any application or method operating on the apparatus 300. The memory 304 can be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power component 306 provides power to the various components of the apparatus 300. The power component 306 may include a power management system, one or more power supplies, and other components associated with generating, managing, and distributing power for the apparatus 300.

The multimedia component 308 includes a screen that provides an output interface between the apparatus 300 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 308 includes a front camera and/or a rear camera. When the apparatus 300 is in an operating mode, such as a shooting mode or a video mode, the front camera and/or the rear camera may receive external multimedia data. Each front camera and rear camera may be a fixed optical lens system or have a focal length and optical zoom capability.

The audio component 310 is configured to output and/or input audio signals. For example, the audio component 310 includes a microphone (MIC), and when the apparatus 300 is in an operating mode, such as a call mode, a recording mode, and a speech recognition mode, the microphone is configured to receive an external audio signal. The received audio signal can be further stored in the memory 304 or sent via the communication component 316. In some embodiments, the audio component 310 also includes a speaker for outputting audio signals.

The input/output interface 312 provides an interface between processing component 302 and peripheral interface modules, such as keyboards, click wheels, buttons, etc. These buttons may include but are not limited to: a home button, a volume button, a start button, and a lock button.

The sensor component 314 includes one or more sensors for providing various aspects of the status assessment of the apparatus 300. For example, the sensor component 314 can detect the turn-on/-off state of the apparatus 300, the relative positioning of components, such as the display and keypad of the apparatus 300, the sensor component 314 can also detect the position change of the apparatus 300 or a component of the apparatus 300, the presence or absence of user contact with the apparatus 300, the orientation or acceleration/deceleration of the apparatus 300, and the temperature change of the apparatus 300. The sensor component 314 can include a proximity sensor configured to detect the presence of a nearby object without any physical contact. The sensor component 314 can also include an optical sensor, such as a CMOS or CCD image sensor, for use in imaging applications. In some embodiments, the sensor component 314 can also include an accelerometer, a gyroscope sensor, a magnetic sensor, a pressure sensor, or a temperature sensor.

The communication component 316 is configured to facilitate wired or wireless communication between the apparatus 300 and other devices. The apparatus 300 can access a wireless network based on a communication standard, such as WiFi, 2G or 3G, or a combination thereof. In an exemplary embodiment, the communication component 316 receives a broadcast signal or broadcast-related information from an external broadcast management system via a broadcast channel. In an exemplary embodiment, the communication component 316 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the apparatus 300 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above method.

In an exemplary embodiment, a non-transitory computer-readable storage medium including instructions is further provided, such as a memory 304 including instructions, and the instructions can be executed by the processor 320 of the apparatus 300 to implement the above method. For example, the non-transitory computer-readable storage medium can be a ROM, a random access memory (RAM), a CD-ROM, a magnetic tape, a floppy disk, an optical data storage device, and the like.

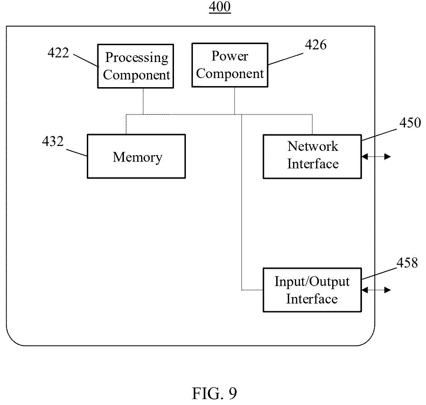

FIG. 9 is a block diagram of an uplink communication apparatus according to an exemplary embodiment. For example, the apparatus 400 may be provided as a network device. Referring to FIG. 9, the apparatus 400 includes a processing component 422, which further includes one or more processors, and a memory resource represented by a memory 432 for storing instructions executable by the processing component 422, such as an application. The application stored in the memory 432 may include one or more modules, each corresponding to a set of instructions. In addition, the processing component 422 is configured to execute instructions to perform the above method.

The apparatus 400 may also include a power supply component 426 configured to perform power management of the apparatus 400, a wired or wireless network interface 450 configured to connect the apparatus 400 to a network, and an input/output (I/O) interface 458. The apparatus 400 may operate an operating system stored in the memory 432, such as Windows Server^{™}, Mac OS X^{™}, Unix^{™}, Linux^{™}, FreeBSD^{™}, or the like.

In an exemplary embodiment, a non-transitory computer-readable storage medium including instructions is further provided, such as a memory 432 including instructions, which can be executed by the processing component 422 of the apparatus 400 to implement the above method. For example, the non-transitory computer-readable storage medium can be a ROM, a random access memory (RAM), a CD-ROM, a magnetic tape, a floppy disk, an optical data storage device, and the like.

It is further understood that in the present disclosure, "plurality", "multiple", and "more" refer to two or more than two, and other quantifiers are similar thereto. "And/or" describes the association relationship of associated objects, indicating that three relationships may exist. For example, A and/or B may represent: A exists alone, A and B exist at the same time, and B exists alone. The character "/" generally indicates that the associated objects before and after are in an "or" relationship. The singular forms "a", "the" and "the" are also intended to include plural forms, unless the context clearly indicates other meanings.

It is further understood that the terms "first", "second", and the like are used to describe various information, but such information should not be limited to these terms. These terms are only used to distinguish the same type of information from each other, and do not indicate a specific order or degree of importance. In fact, the expressions "first", "second", and the like can be used interchangeably. For example, without departing from the scope of the present disclosure, the first information can also be referred to as the second information, and similarly, the second information can also be referred to as the first information.

It is further understood that, although the operations are described in a specific order in the drawings in these embodiments of the present disclosure, it should not be understood as requiring that the operations be performed in the specific order shown or in a serial order, or requiring that all the operations shown be performed to obtain the desired results. In certain environments, multitasking and parallel processing may be advantageous.

Those skilled in the art will readily appreciate other embodiments of the present disclosure after considering the specification and practicing the invention disclosed herein. This application is intended to cover any modifications, uses or adaptations of the present disclosure, which follow the general principles of the present disclosure and include common knowledge or customary technical means in the art that are not disclosed in the present disclosure.

It should be understood that the present disclosure is not limited to the precise structures that have been described above and shown in the drawings, and that various modifications and changes may be made without departing from the scope thereof. The scope of the present disclosure is limited only by the scope of the appended claims.

## Claims

1. An uplink communication method, wherein the method is performed by a terminal and comprises:
receiving first information, the first information indicating the terminal to transmit an uplink UL signal in M time slots, where M is a positive integer;
receiving second information, the second information indicating that the terminal can transmit the UL signal on a first symbol, wherein the first symbol comprises a subband full duplex SBFD symbol, or the first symbol comprises a non-SBFD symbol, or the first symbol comprises the SBFD symbol and the non-SBFD symbol; and
determining a first time slot as an available time slot for the UL signal based on the first information and the second information.

2. The method according to claim 1, wherein determining the first time slot as the available time slot for the UL signal comprises:
determining the first time slot as the available time slot for the UL signal based on a first condition;
wherein the first condition is used for determining a second time slot, and the second time slot is an unavailable time slot for the UL signal.

3. The method according to claim 2, wherein the first condition is determined based on at least one of following:
a category of a second symbol, wherein the second symbol is a symbol of the UL signal in one time slot;
a position of a third symbol, wherein the third symbol is a symbol where a synchronization signal block SSB is located; and
a first frequency domain range, wherein the first frequency domain range is a frequency domain range available for UL signal transmission on one symbol.

4. The method according to claim 3, wherein the first symbol comprises the SBFD symbol and the non-SBFD symbol, and the first condition comprises at least one of following:
at least one symbol of the second symbol is a downlink symbol;
at least one symbol of the second symbol overlaps with the third symbol;
at least one symbol of the second symbol overlaps with the third symbol, and an overlapping symbol is the non-SBFD symbol;
at least one symbol of the second symbol overlaps with the third symbol, the overlapping symbol is the SBFD symbol, and the terminal satisfies a second condition, wherein the second condition is that the terminal receives the SSB on the third symbol for measurement; and
on at least one symbol of the second symbol, a second frequency domain range and the first frequency domain range do not overlap partially or completely, wherein the second frequency domain range is a frequency domain range of the UL signal on the second symbol.

5. The method according to claim 3, wherein the first symbol comprises the SBFD symbol, and the first condition comprises at least one of following:
at least one symbol of the second symbol is a downlink symbol;
at least one symbol of the second symbol is the non-SBFD symbol;
the second symbol is the non-SBFD symbol;
at least one symbol of the second symbol overlaps with the third symbol;
at least one symbol of the second symbol overlaps with the third symbol, and an overlapping symbol is the non-SBFD symbol;
at least one symbol of the second symbol overlaps with the third symbol, the overlapping symbol is the SBFD symbol, and the terminal satisfies a second condition, wherein the second condition is that the terminal receives the SSB on the third symbol for measurement; and
on at least one symbol of the second symbol, a second frequency domain range and the first frequency domain range do not overlap partially or completely, wherein the second frequency domain range is a frequency domain range of the UL signal on the second symbol.

6. The method according to claim 3, wherein the first symbol comprises the non-SBFD symbol, and the first condition comprises at least one of following:
at least one symbol of the second symbol is a downlink symbol;
at least one symbol of the second symbol is the downlink symbol or the SBFD symbol; and
at least one symbol of the second symbol overlaps with the third symbol.

7. An uplink communication method, wherein the method is performed by a network device and comprises:
sending first information, the first information indicating a terminal to transmit an uplink UL signal in M time slots, where M is a positive integer;
sending second information, the second information indicating that the terminal can transmit the UL signal on a first symbol, wherein the first symbol comprises a subband full duplex SBFD symbol, or the first symbol comprises a non-SBFD symbol, or the first symbol comprises the SBFD symbol and the non-SBFD symbol; and
receiving the UL signal in the first time slot, wherein the first time slot is an available time slot for the UL signal.

8. The method according to claim 7, wherein the first time slot is determined based on a first condition;
wherein the first condition is used for determining a second time slot, and the second time slot is an unavailable time slot for the UL signal.

9. The method according to claim 8, wherein the first condition is determined based on at least one of following:
a category of a second symbol, wherein the second symbol is a symbol of the UL signal in one time slot;
a position of a third symbol, wherein the third symbol is a symbol where a synchronization signal block SSB is located; and
a first frequency domain range, wherein the first frequency domain range is a frequency domain range available for UL signal transmission on one symbol.

10. The method according to claim 9, wherein the first symbol comprises the SBFD symbol and the non-SBFD symbol, and the first condition comprises at least one of following:
at least one symbol of the second symbol is a downlink symbol;
at least one symbol of the second symbol overlaps with the third symbol;
at least one symbol of the second symbol overlaps with the third symbol, and an overlapping symbol is the non-SBFD symbol;
at least one symbol of the second symbol overlaps with the third symbol, the overlapping symbol is the SBFD symbol, and the terminal satisfies a second condition, wherein the second condition is that the terminal receives the SSB on the third symbol for measurement; and
on at least one symbol of the second symbol, a second frequency domain range and the first frequency domain range do not overlap partially or completely, wherein the second frequency domain range is a frequency domain range of the UL signal on the second symbol.

11. The method according to claim 9, wherein the first symbol comprises the SBFD symbol, and the first condition comprises at least one of following:
at least one symbol of the second symbol is a downlink symbol;
at least one symbol of the second symbol is the non-SBFD symbol;
the second symbol is the non-SBFD symbol;
at least one symbol of the second symbol overlaps with the third symbol;
at least one symbol of the second symbol overlaps with the third symbol, and an overlapping symbol is the non-SBFD symbol;
at least one symbol of the second symbol overlaps with the third symbol, the overlapping symbol is the SBFD symbol, and the terminal satisfies a second condition, wherein the second condition is that the terminal receives the SSB on the third symbol for measurement; and
on at least one symbol of the second symbol, a second frequency domain range and the first frequency domain range do not overlap partially or completely, wherein the second frequency domain range is a frequency domain range of the UL signal on the second symbol.

12. The method according to claim 10, wherein the first symbol comprises the non-SBFD symbol, and the first condition comprises at least one of following:
at least one symbol of the second symbol is a downlink symbol;
at least one symbol of the second symbol is the downlink symbol or the SBFD symbol; and
at least one symbol of the second symbol overlaps with the third symbol.

13. An uplink communication apparatus, wherein the apparatus comprises:
a receiving module, configured to receive first information, the first information indicating the terminal to transmit an uplink UL signal in M time slots, where M is a positive integer;
the receiving module, further configured to receive second information, the second information indicating that the terminal can transmit the UL signal on a first symbol, wherein the first symbol comprises a subband full duplex SBFD symbol, or the first symbol comprises a non-SBFD symbol, or the first symbol comprises the SBFD symbol and the non-SBFD symbol; and
a processing module, configured to determine a first time slot as an available time slot for the UL signal based on the first information and the second information.

14. An uplink communication apparatus, wherein the apparatus comprises:
a sending module, configured to send first information, the first information indicating a terminal to transmit an uplink UL signal in M time slots, where M is a positive integer;
the sending module, further configured to send second information, the second information indicating that the terminal can transmit the UL signal on a first symbol, wherein the first symbol comprising a subband full duplex SBFD symbol, or the first symbol comprises a non-SBFD symbol, or the first symbol comprises the SBFD symbol and the non-SBFD symbol; and
a receiving module, configured to receive the UL signal in the first time slot, wherein the first time slot is an available time slot for the UL signal.

15. An uplink communication apparatus, wherein the apparatus comprises:
a processor; and
a memory, configured to store processor-executable instructions;
wherein the processor is configured to perform the uplink communication method according to any one of claims 1 to 6.

16. An uplink communication apparatus, wherein the apparatus comprises:
a processor; and
a memory, configured to store processor-executable instructions;
wherein the processor is configured to perform the uplink communication method according to any one of claims 7 to 12.

17. A storage medium, wherein the storage medium stores instructions, when the instructions in the storage medium are executed by a processor of a terminal, the terminal performs the uplink communication method according to any one of claims 1 to 6.

18. A storage medium, wherein the storage medium stores instructions, when the instructions in the storage medium are executed by a processor of a network device, the network device performs the uplink communication method according to any one of claims 7 to 12.
